# DEMANDE DE BREVET EUROPEEN

(11) **EP 1 351 372 A1**
(43) Date de publication de la demande: **08.10.2003**
(21) Numéro de dépôt: 03290613.3
(22) Date de dépôt: 12.03.2003
(51) Int. Cl.: H02K 24/00, G01D 5/22

(54) **Capteur angulaire inductif de type synchro resolver**

(30) Priorité: 14.03.2002 FR 0203188
(71) Demandeur: Precilec, 89002 Auxerre Cédex (FR)
(72) Inventeur: Foucher, Christian, 89000 Auxerre (FR)
(74) Mandataire: Regi, François-Xavier

(57) **Abrégé**

Le capteur inductif comprend un stator et un rotor. Le stator a une armature (10,11) de révolution autour d'un axe, en matériau ferromagnétique, portant une bobine primaire annulaire (13) centrée sur l'axe, prévue pour être alimentée par une tension alternative, de constitution telle qu'elle génère un flux électromagnétique dans l'armature, et deux bobinages secondaires identiques (14a, 14b). Les bobines secondaires sont disposées en quadrature du point de vue électrique ; chacune est en forme d'anneau cintré traversant un bras de l'armature par des ouvertures ménagées dans le sens axial dans l'armature. Le rotor est sans bobinage, en matériau ferromagnétique, ayant successivement, dans le sens axial, un tronçon présentant une symétrie de révolution situé radialement au droit de la bobine primaire et un tronçon présentant, au droit des bobines secondaires, un pôle semi-cylindrique en saillie radiale d'angle déterminé et de diamètre tel que l'entrefer qui subsiste entre lui et le stator soit faible par comparaison à l'entrefer entre le stator et le rotor en dehors du segment du tronçon de façon à provoquer un couplage de la bobine primaire avec les bobines secondaires qui varie en fonction de la position angulaire du rotor.

## Description

La présente invention concerne les capteurs angulaires inductifs de type synchro, et notamment des résolveurs et synchro fonctionnant à la manière d'un transformateur tournant.

Les synchro résolveurs comprennent deux parties déplaçables angulairement l'une par rapport à l'autre autour d'un axe. Par commodité, on désignera l'une de ces parties comme étant un stator et l'autre comme étant un rotor. Mais cela n'implique pas que le stator ait une orientation fixe.

Dans les résolvers classiques, à transformateur tournant, le rotor supporte un bobinage secondaire du transformateur et la partie active du résolveur avec son bobinage primaire. Le stator comprend un bobinage primaire de transfo et la partie active avec le bobinage secondaire du résolveur. Le rotor et les éléments du stator ont une constitution telle que les tensions aux bornes de deux bobines constituant le bobinage secondaire soient fonction de la position angulaire du rotor, pour une tension alternative donnée d'alimentation du primaire. Ces bobines sont montées de façon à fournir deux tensions Us1 et Us2 :
Us1 = k. Up. Cos (n.θ)
Us2 = k. Up. Cos (n.θ)
   où
   n est un nombre entier, égal au nombre de paires de pôles
   Up est la tension primaire
   k est une constante
   θ est l'angle fait par le rotor avec une orientation de référence.

Dans un capteur destiné à constituer émetteur ou récepteur d'un synchro, le bobinage secondaire est prévu pour fournir trois tensions de sorte
Us1 = k. Up. Sin (n.θ)
Us2 = k. Up. Sin (120/n+nθ)
Us2 = k. Up. Sin (-120/n+nθ)

Les capteurs inductifs de type synchro résolveur existants ont généralement un rotor de constitution complexe. On peut réduire cette complexité en plaçant tous les bobinages sur le stator et le rotor devient sans balai ni bobinage. Mais avec les conceptions actuelles la précision sur la mesure d'angle est réduite et les tensions fournies par les bobines secondaires présentent un déphasage très variable en fonction de divers paramètres.

La présente invention vise notamment à fournir un capteur angulaire inductif de type résolveur répondant mieux que ceux antérieurement connus aux exigences de la pratique, notamment en ce que le rotor a une constitution simple et robuste et que le capteur peut néanmoins être réalisé pour des résolutions angulaires adaptées à chaque besoin.

Dans ce but, l'invention propose notamment un capteur angulaire inductif comprenant :
- un stator ayant une armature de révolution autour d'un axe, en matériau ferromagnétique, portant:
   . une bobine primaire annulaire centrée sur l'axe, prévue pour être alimentée par une tension alternative, de constitution telle qu'elle génère un flux électromagnétique dans l'armature et
   . plusieurs bobinages secondaires, régulièrement répartis angulairement, traversant un bras de l'armature par des ouvertures ménagées dans le sens axial dans l'armature, et
- un rotor sans bobinage, en matériau ferromagnétique, ayant successivement, dans le sens axial, un tronçon présentant une symétrie de révolution situé radialement au droit de la bobine primaire et un tronçon présentant, au droit des bobines secondaires, un pôle semi-cylindrique en saillie radiale d'angle déterminé et de diamètre tel que l'entrefer qui subsiste entre lui et le stator soit faible par comparaison à l'entrefer entre le stator et le rotor en dehors du segment du tronçon de façon à provoquer un couplage de la bobine primaire avec les bobines secondaires qui varie en fonction de la position angulaire du rotor.

En général, chaque bobinage secondaire sera en forme d'anneau cintré.

La bobine primaire peut être formée par un seul enroulement. Elle peut également être constituée de deux enroulements annulaires placés de part et d'autre des bobines secondaires sur le stator.

Dans le cas d'un résolveur, les bobinages secondaires sont disposés en quadrature du point de vue électrique.

L'armature entoure le rotor. Elle comporte avantageusement une première partie annulaire, qui peut être en matériau massif, portant un support de la bobine primaire et une seconde partie annulaire, en matériau ferromagnétique avantageusement feuilleté dans le sens axial (paquet de tôles), portant les bobines secondaires.

La première partie peut notamment avoir une section droite en L.

Les deux bobinages secondaires peuvent traverser la seconde partie par des ouvertures communes. Elles ont chacune un développement angulaire aussi proche que possible de 180° électrique.

Les caractéristiques ci-dessus ainsi que d'autres apparaîtront mieux à la lecture de la description qui suit d'un mode particulier de réalisation de l'invention, donné à titre d'exemple non limitatif.

La description se réfère aux dessins qui l'accompagnent, dans lesquels :
- la figure 1 est une représentation simplifiée d'un capteur, en coupe suivant un plan médian passant par l'axe ;
- la figure 1A est une vue en perspective du rotor ;
- la figure 2 est une vue en élévation d'une des tôles du stator, faisant apparaître les encoches de passage des bobines secondaires portées par le stator ;
- la figure 3 montre l'allure des lignes de flux magnétiques dans la partie semi-cylindrique du rotor et dans les tôles, lorsque le rotor est dans une position médiane ;
- la figure 4 est un schéma électrique de principe du capteur et de ses liaisons ;
- la figure 5 montre l'allure de la variation des tensions de sortie des bobines statoriques en fonction de l'angle du rotor par rapport à sa position médiane ;
- la figure 6, similaire à la figure 1, montre une variante de réalisation à deux bobinages primaires ;
- la figure 7 montre une répartition des bobinages secondaires dans le cas d'un capteur utilisable comme résolveur, sous forme développée ;
- la figure 8, encore similaire à la figure 1, montre une variante de réalisation à deux jeux d'enroulements secondaires et deux pôles, et

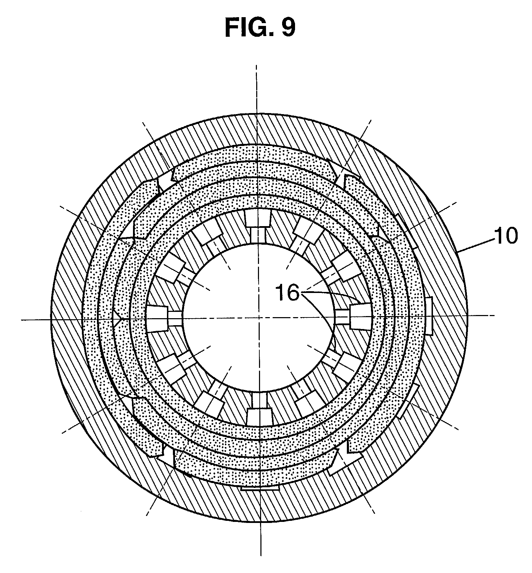

- la figure 9 est une vue en élévation montrant, à titre d'exemple, une répartition de bobinages correspondant à un résolveur à 12 encoches.

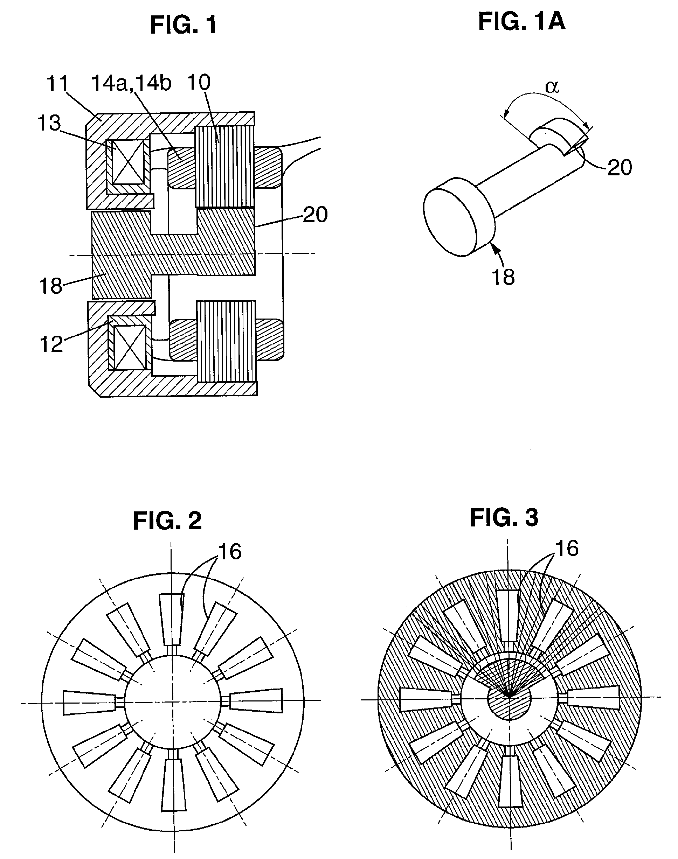

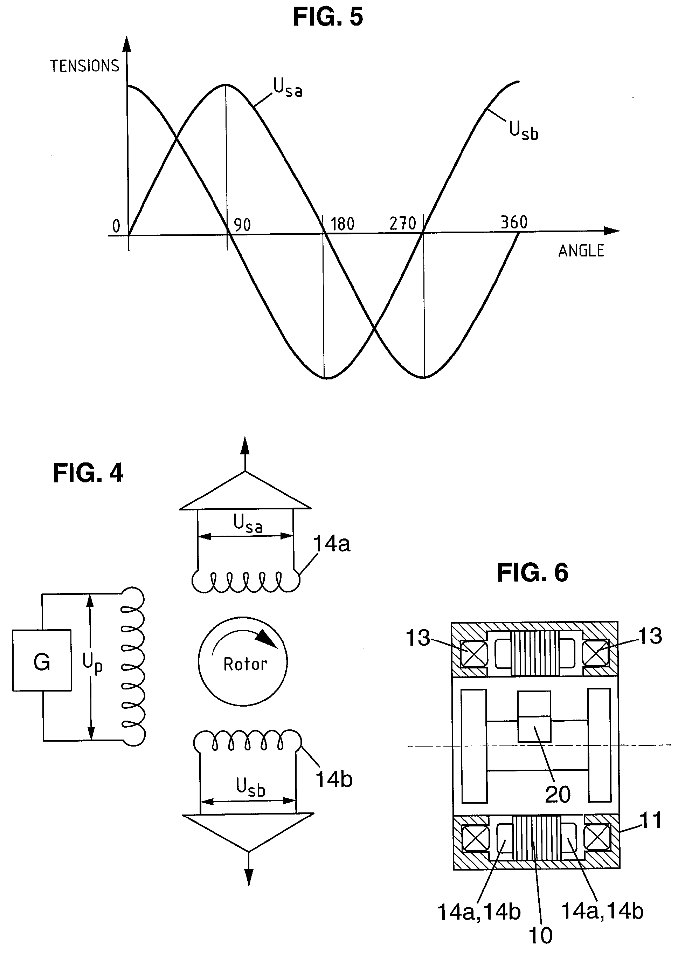

Le capteur de type synchro résolveur représenté sur les figures 1 à 3 comporte une partie ferromagnétique comparable à celle décrite dans la demande de brevet FR 01 14022, à laquelle on pourra se reporter, sauf en ce qui concerne le découpage des tôles du bras de l'armature. Il peut être regardé comme ayant un stator et un rotor. Le stator comporte une armature ou carcasse en matériau ferromagnétique, constituée en deux parties assemblées dans le cas illustré en figure 1. Une première partie 11, qui peut être notamment en matériau ferromagnétique massif, est de révolution et a une section droite en forme de L dans un plan passant par l'axe. Dans cette partie 11 est pratiqué un logement annulaire de réception du support 12 d'une bobine primaire 13, constituée par un enroulement de spires jointives. Cette bobine primaire a un montage et une constitution similaires à celles d'une bobine de transformateur tournant. Elle est prévue pour être alimentée par un générateur G (figure 4) sous une tension alternative constante Up. Souvent la fréquence d'alimentation sera comprise entre 100 Hz et 10 KHz. La seconde partie 10 de l'armature du stator est constituée par un paquet de tôles fixé à la première partie 11 pour assurer la continuité du circuit magnétique. Elle a une structure feuilletée dans le sens axial comme le montre la figure 2. On peut notamment utiliser des tôles minces (par exemple de 0,35 mm d'épaisseur environ) en fer-nickel. Dans une variante de réalisation, utilisable notamment lorsque la fréquence d'alimentation est relativement basse, la partie 10 est également en matériau ferromagnétique massif.

La seconde partie 10 porte deux bobinages secondaires, 14a et 14b, disposées en quadrature. Les bobines présentent une forme générale ayant une courbure telle qu'elles se placent à peu près coaxialement au rotor et elles traversent la partie 10 par un nombre pair d'encoches ou ouvertures 16, particulièrement aisées à réaliser dans des tôles du genre représenté en figure 2.

Chaque bobinage secondaire 14a, 14b est en plusieurs enroulements répartis comme dans un synchro résolver classique, adaptés aux nombres d'encoches 16 dans le stator.

Les bobinages 14a et 14b, sont identiques et présentent des fils courbés de façon à avoir des portions en arc de cercle autour de l'axe, raccordées par des portions s'étendant parallèlement à l'axe.

La constitution du rotor constitue un élément important du capteur suivant l'invention. Il est constitué en matériau ferromagnétique, entièrement ou du moins dans les parties externes où circule le flux magnétique. Il peut être de constitution massive ou en plusieurs pièces assemblées. Il peut être regardé comme ayant successivement, dans le sens axial (figure 1A) :
- un tronçon de révolution 18, cylindrique ou segmenté, situé radialement au droit du bobinage primaire et délimitant un entrefer de faible dimension radiale, et
- un tronçon présentant, au droit des bobines secondaires, un pôle 20 en forme de segment semi-cylindrique de diamètre suffisamment supérieur à celui du reste du développement angulaire et suffisamment proche du diamètre interne de la partie 10 pour provoquer seul un couplage de la bobine primaire avec les bobines secondaires 14a et 14b.

La dimension angulaire du segment dépend du nombre de paires de pôles du stator. Il voit une section constante sur 360 degrés. Quelle que soit la position du rotor, l'impédance du circuit magnétique reste donc constante. Pour un résolver à 2 pôles (n=1) on adoptera généralement un angle α de 120 degrés. Pour un résolver à 4 pôles (n=2) ; α = 60 degrés. Pour 2n pôles on adoptera α = 120°/n.

Ce dernier couplage varie, pour chaque bobine, en fonction de la position angulaire du rotor.

Dans un tel capteur les tensions Ua et Ub qui apparaissent aux bornes des bobinages secondaires 14a et 14b, pour une tension au primaire Up donnée, varient en fonction de l'angle électrique entre primaire et secondaire comme indiqué sur la figure 6. La variation des tensions est pratiquement sinusoïdale sur la quasi totalité des 360° et ne dépend pratiquement pas des charges au secondaire. Les déphasages des tensions secondaires Usa et Usb par rapport à la tension primaire restent sensiblement constantes quelle que soit la position du rotor.

Les signaux de sortie, représentatifs de fonctions trigonométriques de l'angle du rotor par rapport à une position médiane, peuvent être fournis directement ou par des amplificateurs 22 reliés aux bobinages secondaires 14a et 14b.

Dans le mode de réalisation montré en figure 6, on retrouve une armature ayant une première partie 11 qui porte les supports 12 de deux enroulements montés en série et constituant une bobine primaire 13 et une seconde partie constituée par un paquet de tôles 10. L'armature statorique constitue, avec le rotor, un circuit magnétique fermé. Les deux enroulements de la bobine primaire 13 sont à spires jointives et alimentés en série par une tension alternative qui génère un flux magnétique alternatif dans le circuit.

Le rotor a une constitution symétrique et comporte cette fois deux tronçons de révolution 18 placés en face des bobinages primaires et un segment semi-cylindrique 20 placé en face du paquet de tôles.

Les tronçons rotoriques 18 présentent encore un entrefer constant quelle que soit la position angulaire du rotor. Le tronçon 20, constitué par un secteur de 120° dans le cas illustré, voit une section totale constante du circuit magnétique sur tout son débattement Ainsi, quelle que soit la position du rotor, l'impédance globale du circuit magnétique reste constante.

Les deux bobinages 14a et 14b de chaque secondaire ont le même nombre de spires et sont placés dans les encoches du paquet de tôles 10. La quantité de flux magnétique qui traverse ces bobines dépend essentiellement de la position du rotor par rapport aux encoches du stator. Les bobinages secondaires 14a et 14b génèrent en conséquence chacun une tension alternative dont l'amplitude varie avec la position du rotor. Cette tension de sortie est proportionnelle à la tension primaire Up et en phase avec elle. L'amplitude des tensions secondaires Ua et Ub dépend, comme dans le cas précédent, du rapport des surfaces en regard du segment semi-cylindrique par rapport à la position des bobinages secondaires.

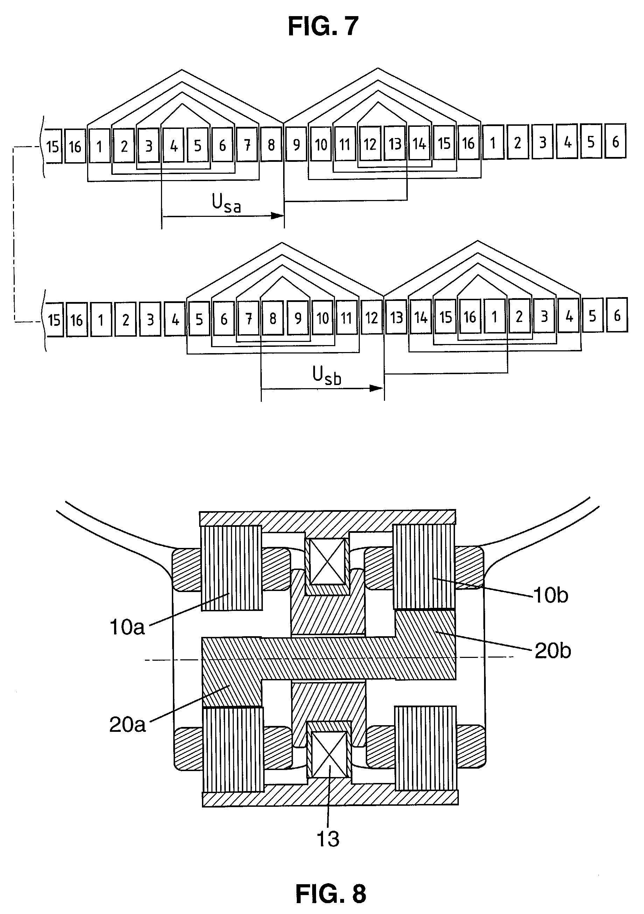

La figure 7 montre, sous forme développée, une constitution possible des bobinages secondaires dans le cas d'un capteur utilisable en résolveur, fournissant deux tensions de sortie ; l'ensemble des liaisons sont représentées.

Au lieu d'une constitution symétrique selon la figure 6, on peut utiliser la disposition de la figure 8, comportant deux pôles 20a et 20b placés chacun face à un paquet de tôles 10a, 10b. Les saillies des deux pôles sont opposées, ce qui a l'avantage d'équilibrer le rotor.

## Revendications

1. Capteur angulaire inductif de type résolveur, comprenant :
- un stator ayant une armature (10,11) de révolution autour d'un axe, en matériau ferromagnétique, portant :
. une bobine primaire annulaire centrée sur l'axe, prévue pour être alimentée par une tension alternative, de constitution telle qu'elle génère un flux électromagnétique dans l'armature et
. plusieurs bobinages secondaires identiques régulièrement répartis angulairement traversant un bras de l'armature par des ouvertures ménagées dans le sens axial dans l'armature, et disposés en quadrature du point de vue électrique,
- un rotor sans bobinage, en matériau ferromagnétique, ayant successivement, dans le sens axial, un tronçon de révolution situé au droit du bobinage primaire et un tronçon présentant, au droit des bobines secondaires, au moins un pôle semi-cylindrique en saillie radiale d'angle déterminé et de diamètre tel que l'entrefer qui subsiste entre lui et le stator soit faible par comparaison à l'entrefer entre le stator et le rotor en dehors du segment du tronçon de façon à provoquer un couplage de la bobine primaire avec les bobines secondaires qui varie en fonction de la position angulaire du rotor.

2. Capteur suivant la revendication 1, dont l'armature comporte une première partie annulaire (11) en matériau massif, pouvant présenter une section droite en L, portant un support de la bobine primaire, et une seconde partie en forme d'anneau, portant les bobines secondaires et constituant le dit bras.

3. Capteur suivant la revendication 2, dont la seconde partie de l'armature est en matériau ferromagnétique feuilleté dans le sens axial.

4. Capteur suivant la revendication 1, 2 ou 3, **caractérisé en ce que** les bobinages secondaires (14a, 14b) traversent le bras de l'armature (10) par des encoches ou fenêtres (16).

5. Capteur suivant l'une quelconque des revendications précédentes, **caractérisé en ce que** le pôle, en forme de segment semi-cylindrique, est de diamètre suffisamment supérieur à celui du reste du développement angulaire et suffisamment proche du diamètre interne de la partie (10) pour provoquer seul un couplage de la bobine primaire avec les bobinages secondaires (14a et 14b).

6. Capteur suivant l'une quelconque des revendications précédentes, **caractérisé en ce qu'**il comporte des amplificateurs (22) reliés aux bobinages secondaires pour fournir des signaux de sortie.

7. Capteur suivant l'une quelconque des revendications 1 à 6, **caractérisé en ce que** la bobine primaire est constituée de deux bobinages annulaires placés de part et d'autre du plan médian et du segment semi-cylindrique.

8. Capteur de type résolveur suivant l'une quelconque des revendications 1 à 7, **caractérisé en ce que** les bobinages secondaires sont disposés en quadrature du point de vue électrique.

9. Capteur suivant l'une quelconque des revendications 1 à 6, **caractérisé en ce que** le rotor comporte deux pôles placés chacun en face d'un paquet de tôles du stator.
